# EUROPÄISCHE PATENTSCHRIFT

(11) **EP 1 279 840 B1**
(45) Veröffentlichungstag und Bekanntmachung des Hinweises auf die Patenterteilung: **22.09.2004**
(21) Anmeldenummer: 02011241.3
(22) Anmeldetag: 22.05.2002
(51) Int. Cl.: F16B 35/04, F16B 41/00, F16B 5/02, E04D 5/14, E04D 3/36

(54) **Befestigungsschraube**
Fastening screw
Vis de fixation

(30) Priorität: 25.07.2001 DE 10136200
(43) Veröffentlichungstag der Anmeldung: 29.01.2003
(73) Patentinhaber: Richter-System GmbH & Co. KG, 64347 Griesheim (DE)
(72) Erfinder: Knauf, Alfons Jean, 64347 Griesheim (DE)
(74) Vertreter: Katscher, Helmut, Dipl.-Ing.

(56) Entgegenhaltungen:
- EP-A- 0 129 404
- FR-A- 2 713 291
- GB-A- 2 124 318

## Beschreibung

Die Erfindung betrifft eine Befestigun gsschraube als Teil einer Montagesicherung an einem Blechteil mit einem Schraubenschaft, einem Schraubenkopf und einem in axialem Abstand dazu angeordneten Befestigungsgewinde, wobei die Befestigungsschraube durch eine Schraubenbohrung des Blechteils gesteckt und gegen Herausfallen frei drehbar gesichert ist.

Derartige Befestigungsschrauben werden in zahlreichen Ausführungsformen und Anwendungsfällen zur Befestigung von Bauteilen an einer Unterkonstruktion eingesetzt. Die Befestigungsschraube wird durch eine Schraubenbohrung des Bauteils gesteckt und mit der Unterkonstruktion verschraubt werden. Insbesondere unter erschwerten Arbeitsbedingungen, beispielsweise im Bauwesen, stellt es einen unerwünschten zusätzlichen Arbeitsaufwand dar, wenn die Befestigungsschraube jeweils durch die Schraubenbohrung gesteckt werden muss, bevor sie angeschraubt wird. Dadurch wird der Arbeitsablauf vor allem dann erschwert, wenn der Benutzer zum Halten der Befestigungsschraube keine Hand mehr frei hat, weil er das anzubringende Bauteil halten muss.

Es sind Schrauben (FR 2 713 291 A) mit zwei getrennten Gewindeabschnitten bekannt. Hierbei dienen die zwei getrennte Gewindeabschnitten jedoch ausschließlich dem besseren Halt des jeweiligen Schraubenabschnitts in zu verbindenden, unterschiedlichen Materialien.

Es sind Befestigungsschrauben mit seinem zusätzlichen Sicherungsgewinde für eine Klemmplatte bekannt (EP 0 129 404 A1). Ein solches Sicherungsgewinde dient jedoch im speziellen Fall nur zu einer verbesserten Befestigung der Klemmplatte an dem darunter liegenden Material, um eine möglichst dichte Verbindung von einer wasserfesten Membrane mit Isoliermaterial zu gewährleisten. Eine Vormontage der Befestigungsschraube an der Klemmplatte ist nicht vorgesehen. Die Befestigungsschraube wird vor Ort durch die Klemmplatte geschraubt und schneidet dabei ein Innengewinde in die Klemmplatte.

Um den erforderlichen Montageaufwand vor Ort zu reduzieren ist man in vielen Fällen dazu übergegangen, die Befestigungsschraube schon vorzumontieren, indem die Befestigungsschraube schon bei der Vorbereitung des Bauteils durch die Schraubenbohrung gesteckt und durch eine geeignete Montagesicherung so gehalten wird, dass sie nicht mehr herausfallen kann, dabei aber frei drehbar bleibt. Beispielsweise kann zu diesem Zweck eine Sicherungsfederscheibe auf dem Schraubenschaft im Abstand zum Schraubenkopf angebracht werden. Die erforderliche Vormontage ist aber verhältnismäßig aufwendig und verursacht zusätzliche Lohnkosten; außerdem besteht ein zusätzlicher Materialbedarf für die Sicherungsfederscheibe. Aufgabe der Erfindung ist es daher, eine Befestigungsschraube der eingangs genannten Gattung so auszuführen, dass sie mit einfachen, im Fertigungsablauf automatisiert ausführbaren Maßnahmen am Blechteil gesichert wird.

Diese Aufgabe wird erfindungsgemäß gelöst durch eine Befestigungsschraube als Teil einer Montagesicherung an einem Blechteil, wobei die Befestigungsschraube einen Schraubenschaft, einen Schraubenkopf und ein in axialem Abstand dazu angeordnetes Befestigungsgewinde aufweist, wobei auf dem Schraubenschaft zwischen dem Schraubenkopf und dem Befestigungsgewinde ein Sicherungsgewinde angeordnet ist, dessen Gewindeinnendurchmesser größer als der Außendurchmesser des Befestigungsgewindes und größer als der Durchmesser des Schraubenschaftes ist, und wobei die Befestigungsschraube durch eine Schraubenbohrung des Blechteils gesteckt und gegen Herausfallen frei drehbar gesichert ist, indem die Schraubenbohrung ein Innengewinde aufweist, welches zu dem Sicherungsgewinde der Befestigungsschraube passt und der Innendurchmesser des Innengewindes der Schraubenbohrung größer als der Außendurchmesser des Befestigungsgewindes und größer als der Durchmesser des Schraubenschaftes ist.

Das Befestigungsgewinde kann beispielsweise ein Holzgewinde sein und das Sicherungsgewinde kann beispielsweise ein Metallgewinde sein. Vorzugsweise haben beide Gewinde gleiche Gangrichtung.

Die so gestaltete Befestigungsschraube wird in die Schraubenbohrung frei eingesteckt, bis das Metallgewinde des schraubenschaftes auf das hierzu passende Innengewinde in der Schraubenbohrung trifft. Sodann wird das Metallgewinde des Schraubenschaftes durch das Innengewinde der Schraubenbohrung hindurch geschraubt, bis sich der zwischen dem Schraubenkopf und dem Metallgewinde liegende Abschnitt des Schraubenschaftes im Bereich der Schraubenbohrung befindet.

In diesem vormontierten Zustand wird das Bauteil mit der daran frei drehbar gesicherten Befestigungsschraube bereitgestellt, beispielsweise auf die Baustelle geliefert. Ein Herausfallen der Befestigungsschraube im vormontierten Zustand wird dadurch verhindert, dass das Metallgewinde des Schraubenschaftes nicht frei durch das Innengewinde der Schraubenbohrung gesteckt werden kann; vielmehr kann das Metallgewinde die Schraubenbohrung nur dadurch passieren, dass es durch das hierzu passende Innengewinde der Schraubenbohrung hindurchgeschraubt wird. Die Befestigungsschraube, deren Befestigungsgewinde beispielsweise ein Holzgewinde oder Metallgewinde ist, kann dann angeschraubt werden.

Zur Montagesicherung der Befestigungsschraube ist es nicht mehr erforderlich, ein gesondertes Sicherungsbauteil, beispielsweise eine Sicherungsfederscheibe, auf die Befestigungsschraube aufzubringen. Da die Festlegung der Befestigungsschraube am Bauteil durch einen einfachen Schraubvorgang erfolgt, kann dieser Vorgang in einfacher Weise automatisiert werden, so dass keine zusätzlichen Lohnkosten für die Herstellung der Montagesicherung anfallen.

Bevorzugt weist der Rand der Schraubenbohrung einen sich in Durchsteckrichtung der Befestigungsschraube erstreckenden zylindrischen Randabschnitt auf. Dadurch steht eine ausreichende axiale Länge zur Herstellung des Innengewindes der Schraubenbohrung zur Verfügung.

Gemäß einer bevorzugten Ausführungsform der Erfindung ist vorgesehen, dass das Blechteil ein im Querschnitt U-förmiger Ankerklip für eine C-Schiene ist und dass die Schraubenbohrung zentrisch im Bodenblech des Ankerklips angeordnet ist.

Die in dieser Weise mit einer vormontierten, gesicherten Befestigungsschraube versehenen Ankerklips sind insbesondere für den Dachausbau geeignet. Die mit Holzgewinde versehenen Befestigungsschrauben werden in Holzbauteile der Dachkonstruktion eingeschraubt. Die Ankerklips werden in im Querschnitt C-förmige Schienen, insbesondere CD-Schienen, eingeklipst, um diese Schienen an der Dachkonstruktion zu tragen.

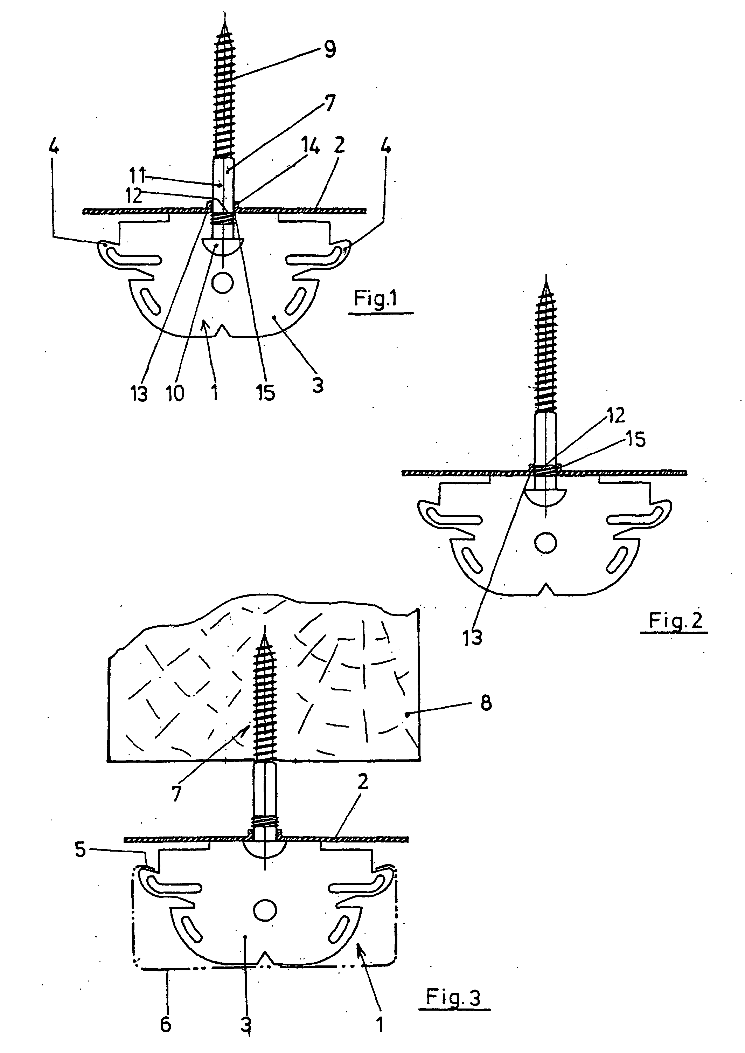

Die Erfindung wird nachfolgend an einem Ausführungsbeispiel näher erläutert, das in der Zeichnung dargestellt ist. Die Zeichnung zeigt in den Fig. 1 - 3 aufeinanderfolgende Montagezustände eines Ankerklips für C-Schienen mit einer Befestigungsschraube.

Der in der Zeichnung als Beispiel für ein Blechteil oder sonstiges Bauteil dargestellte Ankerklip 1 ist im Querschnitt (d. h. einem Schnitt senkrecht zur Zeichenebene) U-förmig und weist ein Bodenblech 2 und zwei davon abgewinkelte Ankerbleche 3 auf. Die beiden Ankerbleche 3 weisen an ihren gegenüberliegenden Rändern vorspringende Nasen 4 auf, die dazu bestimmt sind, unter die nach innen gerichteten Randabschnitte 5 einer (in Fig. 3 nur mit strichpunktierten Linien dargestellten) C-Schiene 6 eingerastet zu werden.

Eine Befestigungsschraube 7 dient dazu, den Ankerklip 1 an einer tragenden Konstruktion zu befestigen, beispielsweise an einem Holzbauteil 8 einer Dachkonstruktion. Die Befestigungsschraube 7 weist beim dargestellten Ausführungsbeispiel als Befestigungsgewinde ein Holzgewinde 9 auf, das in das Holzbauteil 8 einschraubbar ist, sowie einen Schraubenkopf 10. Auf dem Schraubenschaft 11 ist in axialem Abstand zum Schraubenkopf 10 ein Sicherungsgewinde, beispielsweise ein Metallgewinde 12 angeordnet, vorzugsweise ein metrisches Metallgewinde.

Die Befestigungsschraube 7 ist durch eine Schraubenbohrung 13 des Bodenblechs 2 gesteckt. Der Rand der Schraubenbohrung 13 weist einen sich in Durchsteckrichtung der Befestigungsschraube 7 erstreckenden zylindrischen Randabschnitt 14 auf, in den ein Innengewinde 15 geschnitten ist. Das Innengewinde 15 passt zu dem Metallgewinde 12 des Schraubenschaftes 11.

Der Innendurchmesser des Innengewindes 15 ist größer als der Außendurchmesser des Befestigungsgewindes 9 und auch größer als der Durchmesser des Schraubenschaftes 11. Dies gilt auch für den Abschnitt des Schraubenschaftes 11, der zwischen dem Schraubenkopf 10 und dem Metallgewinde 12 liegt.

Bei der Vormontage wird zunächst die Befestigungsschraube in der in Fig. 1 gezeigten Weise in die Schraubenbohrung gesteckt. Sodann wird das Metallgewinde 12 in das Innengewinde 15 der Schraubenbohrung 13 eingeschraubt (Fig. 2) und wird durch die Schraubenbohrung 13 durchgeschraubt. In diesem Zustand, der in Fig. 3 gezeigt ist, kann die Befestigungsschraube 7 frei gedreht werden. Sie ist jedoch gegen ein Herausfallen gesichert. Die frei drehbare Befestigungsschraube kann mit ihrem Holzgewinde in das Holzbauteil 8 eingeschraubt werden, wie in Fig. 3 gezeigt ist.

Der axiale Abstand zwischen dem Schraubenkopf 10 und dem Metallgewinde 12 ist größer als die axiale Länge des zylindrischen Randabschnittes 14.

## Patentansprüche

1. Befestigungsschraube (7) als Teil einer Montagesicherung an einem Blechteil, wobei die Befestigungsschraube (7) einen Schraubenschaft (11), einen Schraubenkopf (10) und ein in axialem Abstand dazu angeordnetes Befestigungsgewinde (9) aufweist, wobei auf dem Schraubenschaft (11) zwischen dem Schraubenkopf (10) und dem Befestigungsgewinde (9) ein Sicherungsgewinde (12) angeordnet ist, dessen Gewindeinnendurchmesser größer als der Außendurchmesser des Befestigungsgewindes (9) und größer als der Durchmesser des Schraubenschaftes (11) ist, und wobei die Befestigungsschraube (7) durch eine Schraubenbohrung (13) des Blechteils gesteckt und gegen Herausfallen frei drehbar gesichert ist, indem die Schraubenbohrung (13) ein Innengewinde (15) aufweist, welches zu dem Sicherungsgewinde (12) der Befestigungsschraube (7) passt und der Innendurchmesser des Innengewindes (15) der Schraubenbohrung (13) größer als der Außendurchmesser des Befestigungsgewindes (9) und größer als der.Durchmesser des Schraubenschaftes (11) ist.

2. Befestigungsschraube (7) als Teil einer Montagesicherung an einem Blechteil nach Anspruch 1, **dadurch gekennzeichnet, dass** das Befestigungsgewinde (9) ein Holzgewinde oder Metallgewinde ist.

3. Befestigungsschraube (7) als Teil einer Montagesicherung an einem Blechteil nach einem der Ansprüche 1 oder 2, **dadurch gekennzeichnet, dass** das Sicherungsgewinde (12) ein Metallgewinde ist.

4. Befestigungsschraube (7) als Teil einer Montagesicherung an einem Blechteil nach einem der Ansprüche 1 - 3, **dadurch gekennzeichnet, dass** das Befestigungsgewinde (9) und das Sicherungsgewinde (12) gleiche Gangrichtung haben.

5. Befestigungsschraube (7) als Teil einer Montagesicherung an einem Blechteil nach einem der Ansprüche 1 - 4, **dadurch gekennzeichnet, dass** der Rand der Schraubenbohrung (13) einen sich in Durchsteckrichtung der Befestigungsschraube (7) erstreckenden zylindrischen Randabschnitt (14) aufweist.

6. Befestigungsschraube (7) als Teil einer Montagesicherung an einem Blechteil nach einem der Ansprüche 1 - 5, **dadurch gekennzeichnet, dass** das Blechteil ein im Querschnitt U-förmiger Ankerklip (1) 'für eine C-Schiene ist und dass die Schraubenbohrung (13) zentrisch im Bodenblech (2) des Ankerklip (1) angeordnet ist.

## Claims

1. Fastening screw (7) as part of an assembly safeguard on a sheet-metal part, the fastening screw (7) having a screw shank (11), a screw head (10) and a fastening thread (9) arranged at an axial distance therefrom, a securing thread (12) being arranged on the screw shank (11) between the screw head (10) and the fastening thread (9), the thread inside diameter of this securing thread (12) being grater than the outside diameter of the fastening thread (9) and greater than the diameter of the screw shank (11), and the fastening screw (7) being put through a screw hole (13) of the sheet-metal part and being secured in a freely rotatable manner against falling out by the screw hole (13) having an internal thread (15) which matches the securing thread (12) of the fastening screw (7) and by the inside diameter of the internal thread (15) of the screw hole (13) being greater than the outside diameter of the fastening thread (9) and greater than the diameter of the screw shank (11).

2. Fastening screw (7) as part of an assembly safeguard on a sheet-metal part according to Claim 1, **characterized in that** the fastening thread (9) is a woodscrew thread or a metal thread.

3. Fastening screw (7) as part of an assembly safeguard on a sheet-metal part according to either of Claims 1 and 2, **characterized in that** the securing thread (12) is a metal thread.

4. Fastening screw (7) as part of an assembly safeguard on a sheet-metal part according to one of Claims 1 to 3, **characterized in that** the fastening thread (9) and the securing thread (12) have the same direction of hand.

5. Fastening screw (7) as part of an assembly safeguard on a sheet-metal part according to one of Claims 1 to 4, **characterized in that** the edge of the screw hole (13) has a cylindrical edge section (14) extending in the through direction of the fastening screw (7).

6. Fastening screw (7) as part of an assembly safeguard on a sheet-metal part according to one of Claims 1 to 5, **characterized in that** the sheet-metal part is an anchor clip (1) of U-shaped cross section for a C-shaped rail, and **in that** the screw hole (13) is arranged centrally in the base plate (2) of the anchor clip (1).

## Revendications

1. Vis de fixation (7) en tant qu'élément d'une sécurité de montage sur une pièce en tôle, la vis de fixation (7) étant munie d'une tige de vis (11), d'une tête de vis (10) et d'un filetage de fixation (9) disposé à distance axiale par rapport à ces dernières, un filetage de sécurité (12) dont le diamètre intérieur du filetage est supérieur au diamètre extérieur du filetage de fixation (9) et supérieur au diamètre de la tige de vis (11) étant disposé sur la tige de vis (11) entre la tête de vis (10) et le filetage de fixation (9) et la vis de fixation (7) étant insérée à travers un perçage pour vis (13) ménagé dans la pièce en tôle et étant sécurisé de façon librement rotative contre une chute, en ce que le perçage pour vis (13) présente un taraudage (15) qui est adapté au filetage de sécurité (12) de la vis de fixation (7) et le diamètre intérieur du taraudage (15) du perçage pour vis (13) étant supérieur au diamètre extérieur du filetage de fixation (9) et supérieur au diamètre de la tige de vis (11).

2. Vis de fixation (7), en tant qu'élément d'une sécurité de montage sur une pièce en tôle selon la revendication 1, **caractérisée en ce que** le filetage de fixation (9) est un filetage.en bois ou en métal.

3. Vis de fixation (7) en tant qu'élément d'une sécurité de montage sur une pièce en tôle selon l'une quelconque des revendications 1 ou 2, **caractérisée en ce que** le filetage de sécurité (12) est un filetage en métal.

4. Vis de fixation (7) en tant qu'élément d'une sécurité de montage sur une pièce en tôle selon l'une quelconque des revendications 1 à 3, **caractérisée en ce que** le filetage de fixation (9) et le filetage de sécurité (12) ont une même direction de pas.

5. Vis de fixation (7) en tant qu'élément d'une sécurité de montage sur une pièce en tôle selon l'une quelconque des revendications 1 à 4, **caractérisée en ce que** le bord du perçage pour vis (13) présente une section de bordure cylindrique (14), s'étendant dans le sens d'extension de la vis de fixation (7).

6. Vis de fixation (7) en tant qu'élément d'une sécurité de montage sur une pièce en tôle selon l'une quelconque des revendications 1 à 5, **caractérisée en ce que** la pièce en tôle est un clip d'ancrage (1) à section transversale en forme de U pour un rail en C et **en ce que** le perçage de la vis (13) est disposé de façon centrale dans la tôle de fond (2) du clip d'ancrage (1).
